# EUROPEAN PATENT APPLICATION

(11) **EP 3 968 030 A1**
(43) Date of publication of application: **16.03.2022**
(21) Application number: 19931656.3
(22) Date of filing: 24.12.2019
(51) Int. Cl.: G01N 35/10, G01N 35/02

(54) **METHOD AND APPARATUS FOR AUTOMATIC ENGAGEMENT WITH ANALYZER, COMPUTER DEVICE AND STORAGE MEDIUM**

(30) Priority: 05.06.2019 CN 201910485307
(71) Applicant: Shenzhen Yhlo Biotech Co., Ltd., 518116 Shenzhen (CN)
(72) Inventor: XIAO, Yujin, Shenzhen, Guangdong 518116 (CN); MIN, Liangliang, Shenzhen, Guangdong 518116 (CN); HU, Kunhui, Shenzhen, Guangdong 518116 (CN)
(74) Representative: Michalski Hüttermann & Partner Patentanwälte mbB
(86) International application number: PCT/CN2019/128001
(87) International publication number: WO 2020/244201

(57) **Abstract**

A method and apparatus for automatic engagement with an analyzer, a computer device and a storage medium The method comprises: acquiring test information of a sample under test and state information of an analyzer, the state information indicating whether the analyzer is in an idle state or an operating state (102); if the analyzer is in an idle state, conveying the sample under test to the analyzer (104); and performing a test on the sample under test according to the test information (106). The method can acquire state information of an analyzer to enable a sample under test to be conveyed to the analyzer timely for performing a test thereon without requiring maintenance personnel to adjust the analyzer according to the state information of the analyzer, thereby reducing manual costs and increasing operation efficiency of the analyzer.

## Description

### TECHNICAL FIELD

The present application relates to a technology field of automatic docking with an analyzer, in particular, to a method and a device for automatically docking with analyzer, a computer device, and a storage medium.

### BACKGROUND

With the development of analyzer detection technology, tests of samples in a laboratory are instrumented, which helps to obtain test results quickly and effectively. Analyzers set up in the laboratory receive hundreds of samples every day, and the demand for the analyzers is increasing. However, a current working mode of the analyzer is to detect the samples according to a preset detection method, which cannot be dynamically adjusted and can only perform the detection in a determined manner. When working conditions of the analyzer changes, the sample transfer cannot be adjusted in time, resulting in low efficiency and waste of resources.

### SUMMARY

Accordingly, it is necessary to provide a method and a device for automatically docking with an analyzer, a computer device, and a storage medium capable of detecting status information on the analyzer and transferring a sample to analyzer to address the above technical problems.

A method for automatically docking with an analyzer includes:
obtaining test information on a sample to be tested and status information on the analyzer, the status information indicating that the analyzer is in an idle state or a working state;
transferring the sample to be tested to the analyzer, if the analyzer is in the idle state; and
testing the sample to be tested according to the test information.

In one of the embodiments, the obtaining the test information on the sample to be tested and testing the sample to be tested according to the test information includes: obtaining a test item corresponding to the sample to be tested according to the test information; and
detecting the sample to be tested according to the test item.

In one of the embodiments, the obtaining the status information on the analyzer further includes:
obtaining reagent information on the analyzer; and
replacing and/or supplementing reagent according to the reagent information.

In one of the embodiments, the method further includes:
obtaining positions of a plurality of analyzers in the idle state and a position of a sample to be tested;
obtaining a plurality of transfer paths from the sample to be tested to the plurality of analyzers according to the positions of the plurality of analyzers and the position of the sample to be tested; and
analyzing distances of the plurality of transfer paths, and transferring the sample to be tested to the corresponding analyzer with a shortest transfer path.

In one of the embodiments, the method further includes:
obtaining positions of a plurality of samples to be tested;
obtaining a plurality of transfer paths from the plurality of samples to be tested to the plurality of analyzers according to the positions of the plurality of analyzers and the positions of the plurality of samples to be tested;
analyzing distances of the plurality of transfer paths, and transferring the samples to be tested to the corresponding analyzer with a shortest transfer path.

In one of the embodiments, the method further includes:
obtaining quantity information on samples to be tested; and
adjusting positions of the samples to be tested according to the quantity information.

In one of the embodiments, the method further includes:
obtaining test result information of the analyzer; and
controlling the analyzer to perform corresponding calibration or retesting according to the test result information.

A device for automatically docking with an analyzer includes:
an identifying module configured to obtain test information on a sample to be tested and status information on the analyzer, the status information indicating that the analyzer is in an idle state or a working state;
a transferring module configured to transfer the sample to be tested to the analyzer if the analyzer is in the idle state; and
a testing module configured to test the sample to be tested according to the test information.

A computer device includes a memory and a processor. A computer program is stored in the memory. When executing the computer program, the processor implements the steps of:
obtaining test information on a sample to be tested and status information on the analyzer, the status information indicating that the analyzer is in an idle state or a working state;
transferring the sample to be tested to the analyzer, if the analyzer is in the idle state; and
testing the sample to be tested according to the test information.

A computer readable storage medium includes a computer program stored thereon. When the computer program is executed by a processor, the following steps are implemented:
obtaining test information on a sample to be tested and status information on the analyzer, the status information indicating that the analyzer is in an idle state or a working state;
transferring the sample to be tested to the analyzer, if the analyzer is in the idle state; and
testing the sample to be tested according to the test information.

The above method and device for automatically docking with the analyzer, the computer device, and the storage medium can transfer the sample to be tested to the analyzer for testing in time by obtaining the status information on the analyzer, without requiring maintenance personnel to adjust the analyzer according to the status information on analyzer, which reduces labor costs and improves the working efficiency of the analyzer.

### BRIEF DESCRIPTION OF THE DRAWINGS

FIG. 1 is a schematic view of a flowchart of a method for automatically docking with an analyzer in an embodiment.
FIG. 2 is a schematic view of a flowchart of a method for automatically docking with an analyzer in another embodiment.
FIG. 3 is a block diagram of a structure of a device for automatically docking with an analyzer in an embodiment.
FIG. 4 is a diagram of an internal structure of a computer device in an embodiment.

### DETAILED DESCRIPTION OF THE EMBODIMENTS

In order to make objects, technical solutions, and advantages of the present application clearer, the present application will be further described below with reference to accompanying drawings and embodiments. It should be understood that specific embodiments described here are only used to explain the preset application, not to limit the present application.

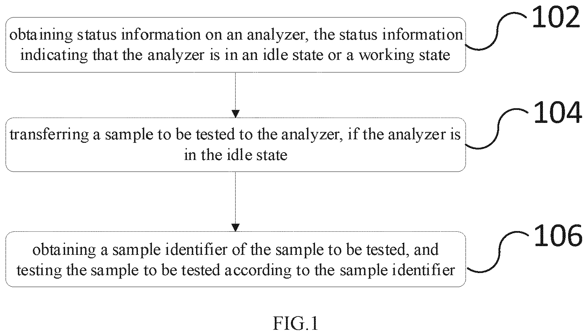

In one embodiment, as shown in FIG. 1, a method for automatically docking with an analyzer is provided. Taking the method applied to a computer device as an example, the method includes the following steps.

Step 102: test information on a sample to be tested and status information on the analyzer are obtained, where the status information indicates that the analyzer is in an idle state or a working state.

The idle state indicates that there is no sample in the analyzer for testing, and the working state indicates that there is a sample in the analyzer for testing.

This step further includes: obtaining reagent information on the analyzer; and replacing and/or supplementing reagent according to the reagent information.

The reagent information includes reagent expiration, insufficient reagent remaining, reagent abnormality, or the like.

Specifically, real-time information on the analyzer is obtained. If the reagent information indicates the reagent expiration, the expired reagent will be replaced with a reagent within a warranty period. If the reagent information indicates that there is insufficient reagent remaining, the corresponding reagent will be supplemented. If the reagent information indicates that the reagent is abnormal, the reagent in the analyzer will be replaced to avoid waste or delay in results.

This steps further include: obtaining working information on the analyzer; and generating corresponding working prompts according to the working information.

The working information includes information of abnormality of the analyzer, waste liquid and waste amount, item activation status, dilution, or the like.

Specifically, the quantity of the waste liquid and waste of the analyzer is monitored in real time, which can remind a user to deal with the abnormality of the analyzer and to deal with the full waste liquid and waste in time. Through the item activation status of the analyzer, it is possible to avoid the samples from entering the analyzer when the quality control is out of control and thus avoid waste and delay in result. If the analyzer is monitored to be abnormal, the analyzer can be maintained and controlled. According to the dilution information, the analyzer can automatically retest the dilution.

This steps further includes: obtaining device information on the analyzer; and generating corresponding control instruction according to the device information.

The device information includes at least one of calibration message and maintenance message.

Specifically, a calibration instruction is generated according to the calibration message, to enable the analyzer to perform calibration configuration and calibration applications. A maintenance instruction is generated according to the maintenance message to enable the analyzer to be maintained and perform control.

Step 104: If the analyzer is in the idle state, the sample to be tested is transferred to the analyzer.

Step 106: the sample to be tested is tested according to the test information.

This step further includes: obtaining a test item corresponding to the sample to be tested according to the test information; and detecting the sample to be tested according to the test item.

Specifically, according to the test information, the test item corresponding to the sample to be tested is queried from a database of the sample to be tested, and the analyzer detects the sample to be tested according to the corresponding test item.

The method further includes: obtaining test result information of the analyzer; and controlling the analyzer to perform corresponding calibration or retesting according to the test result information.

The test result information includes information of dilution result, calibration result, or the like.

Specifically, if the test result information indicates the dilution result, when the dilution result is out of a preset range, the analyzer automatically retests the dilution. If the test result information indicates the calibration result, when the calibration result is abnormal, the analyzer is controlled to perform calibration configuration and calibration application.

In the above-mentioned method for automatically docking with the analyzer, by obtaining the status information on the analyzer, the sample to be tested can be transferred to the analyzer for testing in time, without requiring maintenance personnel to adjust the analyzer according to the status information on analyzer, which reduces labor costs and improves the working efficiency of the analyzer.

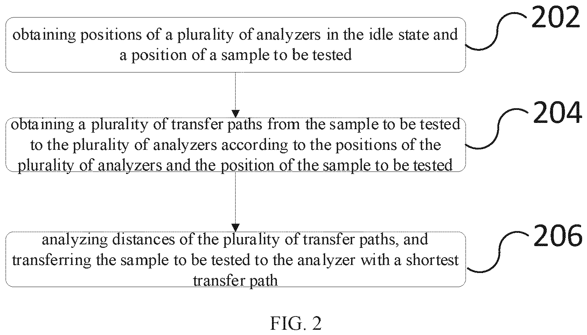

In another embodiment, as shown in FIG. 2, another method for automatically docking with an analyzer is provided. The method for automatically docking with a plurality of analyzers includes the following steps.

Step 202: positions of a plurality of analyzers in an idle state and a position of a sample to be tested are obtained.

Step 204: a plurality of transfer paths from the sample to be tested to the plurality of analyzers are obtained according to the positions of the plurality of analyzers and the position of the sample to be tested.

Specifically, the paths from the position of the sample to be tested to the plurality of analyzers are calculated.

Step 206: distances of the plurality of transfer paths are analyzed, and the sample to be tested is transferred to the corresponding analyzer with a shortest transfer path.

Specifically, the distances of the plurality of transfer paths are analyzed, and the sample to be tested is transferred to the analyzer with the shortest transfer path, which reduces the transfer time of the samples to be tested and improves the working efficiency of the analyzer.

The method further includes:
Obtaining positions of a plurality of samples to be tested;
Obtaining a plurality of transfer paths from the plurality of samples to be tested to the plurality of analyzers according to the positions of the plurality of analyzers and the positions of the plurality of samples to be tested; and
Analyzing distances of the plurality of transfer paths, and transferring the samples to be tested to the corresponding analyzer with a shortest transfer path.

Specifically, the plurality of samples to be tested are located at different positions. The positions of the plurality of analyzers and the positions of the plurality of samples to be tested are calculated to obtain the plurality of transfer paths from the plurality of samples to be tested to the plurality of analyzers. The plurality of samples to be tested are transferred to the corresponding analyzer with the shortest transfer path, which reduces the transfer time of the samples to be tested and improves the working efficiency of the analyzer.

The method further includes:
Obtaining a priority of the plurality of samples to be tested; and
Transferring the plurality of the samples to be tested in an order of priority according to the priority.

Specifically, if there are conflicts between the transfer paths of the plurality of the samples to be tested, the samples are transferred in the order of priority of the samples to be tested to ensure that the samples to be tested with a higher priority enter the analyzer for detection preferentially.

It should be understood that although various steps in the flowcharts of FIGS. 1 to 2 are shown in sequence as indicated by the arrows, these steps are not necessarily performed in sequence in the order indicated by the arrows. Unless specifically stated in this specification, performing these steps is not strictly limited in order, and these steps can be performed in other orders. Moreover, at least some of the steps in FIGS. 1 and 2 may include a plurality of sub-steps or a plurality of stages. These sub-steps or stages are not necessarily performed at the same time, but can be performed at different times. The execution order of these sub-steps or stages is not necessarily performed in sequence, but may be performed in turn or alternately with other steps or at least a part of sub-steps or stages of other steps.

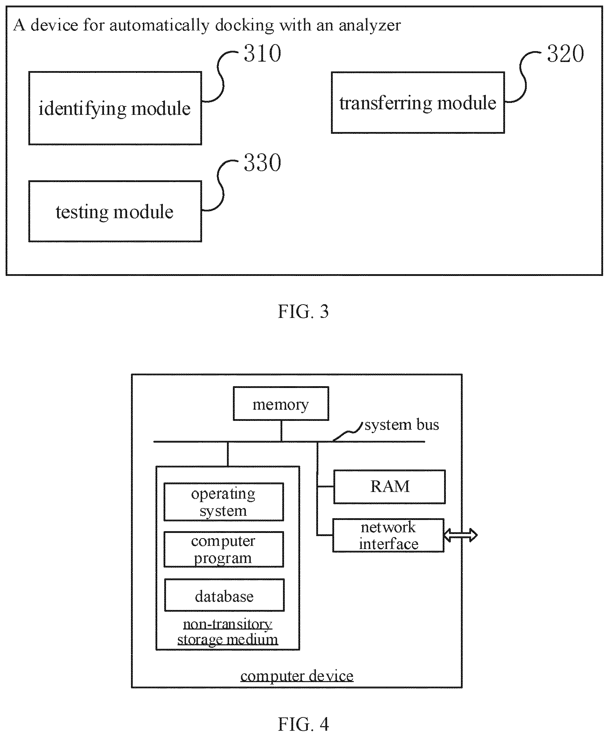

In an embodiment, as shown in FIG. 3, a device for automatically docking with an analyzer is provided, and includes an identifying module 310, a transferring module 320, and a testing module 330.

The identifying module 310 is used to obtain test information on a sample to be tested and status information on the analyzer, where the status information indicates that the analyzer is in an idle state or a working state.

The transferring module 320 is used to transfer the sample to be tested to the analyzer if the analyzer is in the idle state.

The testing module 330 is used to test the sample to be tested according to the test information.

The device for automatically docking with the analyzer further includes an analyzing module 340.

The analyzing module 340 is used to analyze distances of a plurality of transfer paths, and transfer the sample to be tested to the corresponding analyzer with a shortest transfer path.

For the specific definition of the device for automatically docking with the analyzer, reference can be made to the above definition of the method for automatically docking with the analyzer, which will not be repeated here. Each of the modules in the above-mentioned device for automatically docking with the analyzer can be implemented in whole or in part by software, hardware, and a combination thereof. The above-mentioned modules may be embedded in a processor of a computer device in a form of hardware or independent of the processor of the computer device, or may be stored in a memory of the computer device in the form of software, so that the processor can call and execute the operations corresponding to the above-mentioned modules.

In an embodiment, a computer device is provided. The computer device may be a server, and a diagram showing an internal structure thereof may be as shown in FIG. 4. The computer device includes a processor, a memory, a network interface, and a database connected through a system bus. The processor of the computer device is used to provide calculation and control functions. The memory of the computer device includes a non-transitory storage medium and an Random Access Memory (RAM). An operating system, a computer program, and a database are stored in the non-transitory storage medium. The RAM provides an environment for an operation of the operating system and the computer program in the non-transitory storage medium. The database of the computer device is used to store data of a sample to be tested. The network interface of the computer device is used to communicate with an external terminal through a network connection. The computer program is executed by the processor to implement a method for automatically docking with an analyzer.

Those skilled in the art can understand that the structure shown in FIG. 4 is only a block diagram of a part of the structure related to the solution of the present application, and does not constitute a limitation on the computer device to which the solution of the present application is applied. The specific computer device may include more or fewer components, or combine with some components, or have a different arrangement of components, than shown in the figure.

In an embodiment, a computer device is provided, and includes a memory and a processor. A computer program is stored in the memory. When executing the computer program, the processor implements the following steps of:
Obtaining test information on a sample to be tested and status information on an analyzer, where the status information indicates that the analyzer is in an idle state or a working state;
Transferring the sample to be tested to the analyzer, if the analyzer is in the idle state; and
Testing the sample to be tested according to the test information.

In an embodiment, when executing the computer program, the processor further implements the following steps of:
Obtaining reagent information on the analyzer; and
Replacing and/or supplementing reagent according to the reagent information.

In an embodiment, when executing the computer program, the processor further implements the following steps of:
Obtaining positions of a plurality of analyzers in the idle state and a position of a sample to be tested;
Obtaining a plurality of transfer paths from the sample to be tested to the plurality of analyzers according to the positions of the plurality of analyzers and the position of the sample to be tested; and
Analyzing distances of the plurality of transfer paths, and transferring the sample to be tested to the corresponding analyzer with a shortest transfer path.

In an embodiment, when executing the computer program, the processor further implements the following steps of:
Obtaining positions of a plurality of samples to be tested;
Obtaining a plurality of transfer paths from the plurality of samples to be tested to the plurality of analyzers according to the positions of the plurality of analyzers and the positions of the plurality of samples to be tested; and
Analyzing distances of the plurality of transfer paths, and transferring the samples to be tested to the corresponding analyzer with a shortest transfer path.

In an embodiment, when executing the computer program, the processor further implements the following steps of:
Obtaining quantity information on samples to be tested; and
Adjusting positions of the samples to be tested according to the quantity information.

In an embodiment, when executing the computer program, the processor further implements the following steps of:
Obtaining test result information of the analyzer; and
Controlling the analyzer to perform corresponding calibration or retesting according to the test result information.

In an embodiment, a computer readable storage medium is provided, and includes a computer program stored thereon. When the computer program is executed by a processor, the following steps are implemented:
Obtaining test information on a sample to be tested and status information on an analyzer, where the status information indicates that the analyzer is in an idle state or a working state;
Transferring the sample to be tested to the analyzer, if the analyzer is in the idle state; and
Testing the sample to be tested according to the test information.

In an embodiment, the processor further implements the following steps when executing the computer program:
Obtain reagent information on the analyzer; and
Replacing and/or supplementing reagent according to the reagent information.

In an embodiment, when the computer program is executed by the processor, the following steps are implemented:
Obtaining positions of a plurality of analyzers in the idle state and a position of a sample to be tested are obtained;
Obtaining a plurality of transfer paths from the sample to be tested to the plurality of analyzers according to the positions of the plurality of analyzers and the position of the sample to be tested; and
Analyzing distances of the plurality of transfer paths, and transferring the sample to be tested to the corresponding analyzer with a shortest transfer path.

In an embodiment, when the computer program is executed by the processor, the following steps are implemented:
Obtaining positions of a plurality of samples to be tested;
Obtaining a plurality of transfer paths from the plurality of samples to be tested to the plurality of analyzers according to the positions of the plurality of analyzers and the positions of the plurality of samples to be tested; and
Analyzing distances of the plurality of transfer paths, and transferring the samples to be tested to the corresponding analyzer with a shortest transfer path.

In an embodiment, when the computer program is executed by the processor, the following steps are implemented:
Obtain quantity information on samples to be tested; and
Adjusting positions of the samples to be tested according to the quantity information.

In an embodiment, when the computer program is executed by the processor, the following steps are implemented:
Obtaining test result information of the analyzer; and
Controlling the analyzer to perform corresponding calibration or retesting according to the test result information.

A person of ordinary skill in the art can understand that all or part of the processes in methods according to the above embodiments can be implemented by instructing relevant hardware via the computer program, which can be stored in a readable storage medium of a non-transitory computer. When the computer program is executed, the processes of the methods as described above may be included. Where, any reference to memory, storage, database, or other medium used in the embodiments according to this application may include a non-transitory memory and/or a transitory memory. The non-transitory memories may include read-only memory (ROM), programmable ROM (PROM), electrically programmable ROM (EPROM), electrically erasable programmable ROM (EEPROM), or flash memory. The transitory memory may include random access memory (RAM) or external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), Rambus direct RAM (RDRAM), direct memory bus dynamic RAM (DRDRAM), memory bus dynamic RAM (RDRAM), and the like.

The technical features of the above embodiments can be combined arbitrarily. In order to simply the description, all possible combinations of the technical features in the above embodiments are not described. However, if there is no contradiction in the combinations of these technical features, they should be considered to fall into the range described in the present specification.

Only several implementations of the present application are illustrated in the above embodiments, and the description thereof is relatively specific and detailed, but it should not be understood as a limitation on the scope of the present application. It should be noted that for those of ordinary skill in the art, without departing from the concept of the present application, several modifications and improvements can be made, which all fall within the protection scope of the present application. Therefore, the protection scope of the present application shall be subject to the appended claims.

## Claims

1. A method for automatically docking with an analyzer, **characterized by** comprising:
obtaining test information on a sample to be tested and status information on the analyzer, the status information indicating that the analyzer is in an idle state or a working state;
transferring the sample to be tested to the analyzer, if the analyzer is in the idle state; and testing the sample to be tested according to the test information.

2. The method according to claim 1, **characterized in that** the obtaining the test information on the sample to be tested and testing the sample to be tested according to the test information comprises:
obtaining a test item corresponding to the sample to be tested according to the test information; and
detecting the sample to be tested according to the test item.

3. The method according to claim 1, **characterized in that** the obtaining the status information on the analyzer further comprises:
obtaining reagent information on the analyzer; and
replacing and/or supplementing reagent according to the reagent information.

4. The method according to claim 1, **characterized by** further comprising:
obtaining positions of a plurality of analyzers in the idle state and a position of a sample to be tested;
obtaining a plurality of transfer paths from the sample to be tested to the plurality of analyzers according to the positions of the plurality of analyzers and the position of the sample to be tested; and
analyzing distances of the plurality of transfer paths, and transferring the sample to be tested to the corresponding analyzer with a shortest transfer path.

5. The method according to claim 4, **characterized by** further comprising:
obtaining positions of a plurality of samples to be tested;
obtaining a plurality of transfer paths from the plurality of samples to be tested to the plurality of analyzers according to the positions of the plurality of analyzers and the positions of the plurality of samples to be tested; and
analyzing distances of the plurality of transfer paths, and transferring the samples to be tested to the corresponding analyzer with a shortest transfer path.

6. The method according to any one of claims 1 to 5, **characterized by** further comprising:
obtaining quantity information on samples to be tested; and
adjusting positions of the samples to be tested according to the quantity information.

7. The method according to claim 1, **characterized by** further comprising:
obtaining test result information of the analyzer; and
controlling the analyzer to perform corresponding calibration or retesting according to the test result information.

8. A device for automatically docking with an analyzer, comprising:
an identifying module configured to obtain test information on a sample to be tested and status information on the analyzer, the status information indicating that the analyzer is in an idle state or a working state;
a transferring module configured to transfer the sample to be tested to the analyzer if the analyzer is in the idle state; and
a testing module configured to test the sample to be tested according to the test information.

9. A computer device, comprising a memory and a processor, the memory storing computer program which, when executed by the processor, causing the processor to implement steps of the method according to any one of claims 1 to 7.

10. A computer readable storage medium having a computer program stored thereon which, when executed by a processor, causing the processor to implement steps of the method according to any one of claims 1 to 7.
